# EUROPEAN PATENT SPECIFICATION

(11) **EP 1 691 962 B1**
(45) Date of publication and mention of the grant of the patent: **08.10.2014**
(21) Application number: 04800223.2
(22) Date of filing: 26.11.2004
(51) Int. Cl.: B29C 35/08, B29C 44/10, C08J 9/12

(54) **METHOD AND APPARATUS FOR PRODUCING BIODEGRADABLE FOAM**
VERFAHREN UND VORRICHTUNG ZUM ERZEUGEN VON BIOLOGISCH ABBAUBAREM SCHAUM
PROCEDE ET APPAREIL POUR PRODUIRE DE LA MOUSSE BIODEGRADABLE

(30) Priority: 27.11.2003 NZ 529803
(43) Date of publication of application: 23.08.2006
(73) Proprietor: NOVAMONT S.p.A., 28100 Novara (IT)
(72) Inventor: ERRINGTON, John, Gough, Christchurch (NZ); HORNSEY, Anya, Jane, Fairlie (NZ); CHAPMAN, Timothy, James, Christchurch (NZ); WAKE, Maria, Louise, Christchurch (NZ); QUINN, Philip, James, Christchurch (NZ)
(74) Representative: Wilson Gunn
(86) International application number: PCT/NZ2004/000305
(87) International publication number: WO 2005/051628

(56) References cited:
- EP-A2- 0 329 338
- WO-A1-02/14043
- WO-A1-02/20238
- WO-A1-90/08642
- WO-A1-90/08642
- WO-A2-03/037598
- DE-A1- 19 654 860
- US-A- 5 436 432

## Description

### TECHNICAL FIELD

The present invention relates to a method and apparatus for the production of biodegradable foam products. More specifically, the invention relates to a method according to claim 1 and apparatus according to claim 23 for the production of biodegradable foam products using pressure as a key variable to produce a product with improved characteristics including a low density.

### BACKGROUND ART

The present invention builds on the inventions disclosed in WO 02/14043 and WO 03/037598. In WO 02/14043 a two-stage microwave heating process according to the preamble of claim 1 is described for producing a biodegradable foamed product with improved packaging properties including resilience, compressibility and shock absorption. In WO 03/037598 a process and resulting foam is described for producing improved foam surface finish by causing the inner mould surface to heat to a predetermined temperature during processing and the use of a multiple magnetron microwave oven for heating.

The area of biodegradable packaging is widely discussed in the prior art. A variety of products and processing techniques exist that attempt to produce biodegradable foamed materials, as discussed in patent applications WO 02/14043 and WO 03/037598.

Biopolymer packaging foams can be categorised as either: thin-walled moulded foams, suitable for applications such as containers, plates and cups; laminated and agglomerated moulded foams, suitable for void filling and some shock absorption applications; thick-walled moulded foams, most suited to shock absorption applications.

A number of processes have been employed to produce thick-walled biopolymer foams suitable for packaging applications, including direct extrusion methods, conductive heating methods, pressurised vessel methods, and volumetric heating methods such as microwave heating.

### Biodegradable moulded foam shapes produced by microwave heating

This invention builds on the products and processes disclosed in WO 02/14043 (Blue Marble) and WO 03/037598 (Blue Marble). Such starch-based foam shapes formed by microwave heating have the attributes of up to one metre wall thickness and a smooth foam surface appearance achieved by elevating the mould wall temperature using a susceptor during processing. A multiple magnetron oven design is described. Pressure and rapid depressurisation means are contemplated in passing with reference to WO 02/20238 (ATO). WO 03/037598 however, lacks enablement as it does not describe processing sequences using pressure, nor an apparatus design encompassing pressure and depressurisation functions. As discussed below WO 02/20238 also does not provide examples in any details for microwave processes that also encompass use of pressure.

WO 98/51466 (ATO) details a process for forming thick-walled biodegradable foam using a single step microwave heating process. The specification describes that it was important for the foaming process to proceed rapidly by either using a single microwave source having a high output or by a combination of microwave generator and mould, in which the pressure could be varied rapidly. No further reference appears to be made towards pressure and as a result, this specification lacks enablement as no pressure ranges or heating sequences are described, nor is there any description of a microwave and pressure capable apparatus. From the examples cited the best result is a 60 second microwave heating cycle time at atmospheric conditions which produces a foam product with a relatively high density of 150-160kg/m³.

EP 1347008 (Novamont) discloses a process for preparing foamed articles of biodegradable plastic material. Foaming particles prior to bonding, and bonding of particles utilising microwave heating are contemplated, however no detail of any apparatus or any heating profile is provided. Further, the examples do not describe microwave heating or use of pressure.

### Microwave oven designs for moulded foam shapes

US 4,908,486 (Nearctic) discloses a multiple magnetron microwave cavity designed for drying products. While disclosing the principles behind a multiple magnetron design to improve field uniformity, the apparatus is designed for drying applications and does not anticipate the issues associated with combining cavity or mould pressurisation / depressurisation in conjunction with rapid microwave heating, or of producing foamed articles.

US 4,298,324 (Isobox-Barbier) discloses a microwave and mould design for expanding plastic resins. The cavity splits in half with one half remaining fixed and the other moving to allow ejection of the foam shape. Biodegradable resins are not contemplated, nor are multiple magnetron cavity designs, nor heating sequences incorporating elevated and reduced pressures.

### Combined Microwave and Pressure apparatus design

Combined microwave pressure techniques are employed in a number of fields, including chemical digestion, sterilisation, sintering of metals and ceramics.

EP 0329338 (Alcan) discloses a process and apparatus for heating bodies to high temperatures at high pressures. The application is for sintering and isostatic pressing of ceramic powders to increase product density and does not contemplate biopolymer resins or a process of foaming to decrease product density, nor the use of microwave interactive moulds to form complex shapes.

Microwave autoclaves, such as that disclosed in US 5,436,432 (Cyr) have been employed for applications such as chemical digestion and analysis, and sterilization or retorting of food. Such devices do not contemplate the foaming of resins into complex shapes and the pressure/heating sequence required to achieve low density foams via such processes.

### Combined Microwave and Pressure apparatus design for moulded foam shapes

WO 02/20238 (ATO) discloses a process for manufacturing thick-walled biodegradable foamed articles involving a rapid, discontinuous or semi-continuous process of subjecting a biopolymer to a heat and pressure increase by either injection of hot air or steam or alternatively, a heat increase only by use of microwave heating. A rapid depressurisation step is also considered in regard to hot air and steam methods i.e. by stopping flow of the hot air or steam (thus also stopping heating). The combination of microwave heating and pressure is not described. In addition, only one example is provided, utilising steam to achieve the elevated temperature and pressure profile, with a heating cycle time of 5 minutes. Such a long cycle time is not economic and therefore a process and apparatus capable of reducing the heating cycle time to less than one minute is more desirable. It is also the inventors' experience that, unless a very high quality steam is used (and hence higher cost), then use of steam can result in moisture forming on the exterior of the raw material, which, on foaming, causes surface faults on the finished product that are undesirable for packaging applications.

A further application of pressurised microwave heating is for plastic foams as disclosed and discussed in DE 19654860 (Gefinex). Beads of unfoamed plastics are surface coated with a wetting agent and placed in a sealed mould. Microwave heating is used to generate steam as the blowing agent flashes off thus increasing the pressure in the mould and causing foaming as well as welding of the foamed particles together. Such applications do not contemplate the vapour dissipation issues associated with using water as the blowing agent nor the effect of vapour condensation on surface finish which is a key factor in regard to manufacture of biopolymer resins. Depressurisation rates in conjunction with elevated pressure and microwave heating are not described, nor are biodegradable resins.

WO 90/08642 (Adfoam) discloses an apparatus design and process for producing foamed plastic articles. The apparatus disclosed utilises 5kW magnetrons which are exponentially more expensive than standard domestic magnetrons and requires that the mould is moved within the cavity during processing to achieve a uniform microwave field. Depressurisation rates in conjunction with elevated pressure and microwave heating are not contemplated, nor are biodegradable resins.

According to the methods known in the art there is a trade-off between foam density, heating cycle time and apparatus cost. The prior art does not recognise the critical significance of the combination of the process parameters such as heat, pressure and depressurisation, and that without careful consideration, a low-density foam with an adequate surface finish cannot be produced in a cycle time of less than one minute.

Therefore there is a need for a method and apparatus that allows the production of a low density biodegradable foam product with adequate mechanical properties that can operate within a heating cycle time of less than one minute.

It is an object of the present invention to address the foregoing problems or at least to provide the public with a useful choice.

No admission is made that any reference including any patents or patent applications cited in this specification constitutes prior art. The discussion of the references states what their authors assert, and the applicants reserve the right to challenge the accuracy and pertinency of the cited documents. It will be clearly understood that, although a number of prior art publications are referred to herein, this reference does not constitute an admission that any of these documents form part of the common general knowledge in the art, in New Zealand or in any other country.

It is acknowledged that the term 'comprise' may, under varying jurisdictions, be attributed with either an exclusive or an inclusive meaning. For the purpose of this specification, and unless otherwise noted, the term 'comprise' shall have an inclusive meaning - i.e. that it will be taken to mean an inclusion of not only the listed components it directly references, but also other non-specified components or elements. This rationale will also be used when the term 'comprised' or 'comprising' is used in relation to one or more steps in a method or process.

Further aspects and advantages of the present invention will become apparent from the ensuing description which is given by way of example only.

### DISCLOSURE OF INVENTION

According to one aspect of the present invention, there is provided a method of producing a biodegradable foamed product according to claim 1.

For the purposes of this invention, the term 'heating cycle' is defined as a time period that commences when the raw material for foaming is situated inside the closed mould and is ready for processing into a foam, and ends when the resultant foamed product is ready for removal from the mould.

It is the inventors' experience that unexpectedly, by controlling key parameters of the heating cycle including the pressure and microwave energy used, the level of expansion can be balanced against the level of shrinkage and hence a foam product can be produced at a reduced density and at a rapid speed.

The inventors have found that a fully moulded product with a continuous soft resilient foam surface is more easily achieved where pressure is increased during the heating cycle. Further, by using elevated pressure, the electric field strength that can be sustained without the occurrence of voltage breakdown (arcing and plasma formation) may be greatly increased and as a result, the heating time (and processing costs) may be reduced.

It is known that elevating pressure also elevates the boiling point of the blowing agent (water) resulting in greater vapour pressures being achieved inside the raw material before the water "flashes". This greater vapour pressure results in an increased magnitude of pressure drop experienced by the water vapour, which in turn increases expansion and therefore lowers the finished product foam density. A yet further advantage of elevated pressure is that the melt viscosity of the raw material is reduced resulting in an increased expansion ratio and resultant lower foam density. If the melt viscosity is too low, the internal vapour pressure in the raw material may not be contained and the material easily ruptures. Conversely, it is the inventors' experience that there is an upper limit regarding the melt viscosity. If the melt viscosity is too high, the raw material may shrink excessively after initial expansion therefore causing an increase in foam density.

A further advantage of elevating pressure is that the rate of vapour loss by diffusion can be reduced. As a result more energy can be delivered to the starting material, without the loss of the blowing agent (water) or burning, resulting in an increase of vapour pressure within the raw material and therefore, reduced foam density. If water is the sole blowing agent, loss of vapour has a significant negative impact on both expansion and adhesion where starch-based pellets are used as the raw material.

Preferably, the compressed gas is air. More preferably, the gas or air source is not pre-treated such as by heating. This has the advantage that the pressurising agent is inexpensive and requires minimal pre-treatment.

In preferred embodiments, the raw biodegradable material is substantially the same as that described in WO 02/14043 and WO 03/037598.

It is desirable that the starting materials are biodegradable and thus offer a significant environmental benefit over traditional materials such as polystyrene. This should not however be seen as limiting as it should be appreciated by those skilled in the art that other raw materials which have similar foaming characteristics to preferred materials may also be used in accordance with the present invention.

More particularly, the raw biodegradable material is derived from starch, cellulose, protein or a derivative of starch, cellulose, or protein and combinations thereof. Preferably, the raw material has a moisture content in the order of 5 to 30% wt with the moisture in the material acting as a blowing agent during the heating cycle.

Preferably, the raw biodegradable material is processed using a heat and shear generating process into pellets. Most preferably the process is extrusion.

Preferably, the heating cycle is completed in less than approximately 1 minute. More preferably, the heating cycle is completed in the order of 30 seconds.

In preferred embodiments, the increased pressure is held for over half of the duration of step (c). By way of example, in one preferred embodiment, the increased pressure is held for approximately % of time to complete step (c).

It is the inventors' experience that, up to a point, the greater the time that the raw material is held under pressure, the greater the level of expansion. It is the inventors' understanding that if the time under pressure is too short, insufficient time occurs to allow initiation of boiling of the blowing agent (preferably water) contained in the pellets, and hence no or little expansion will result. This is thought to be because the raw material is not heated sufficiently to plasticize the material to a point where it flows and instead, the material ruptures immediately as a result of the expansion force of the internal vapour pressure when the pressure is reduced.

Preferably, the raw material is subjected to a pressure of between 1.5 and 100 bar during step (c). More preferably, the raw material is subjected to a pressure of between 3 and 20 bar during step (c). In preferred embodiments, the pressure is held at an approximately constant level although it should be appreciated that the pressure may be varied without departing from the scope of the invention for example, to optimise the pressure used to meet the characteristics of the raw material chosen.

It should be appreciated by those skilled in the art that the elevated pressure chosen will be in part a commercial decision. It is the inventors' understanding that the ideal pressure will at least in part be a compromise between improved characteristics obtained from the increased pressure levels against the increased cost of the pressure vessel design to account for greater pressures. It should be appreciated that capital costs increase substantially as greater extremes in pressure (or vacuum are required).

The pressure on the raw material is decreased in a controlled manner during step (c).

Microwave heating continues after the pressure is decreased in step (c). It is the inventor's experience that this additional heating improves the final foam product properties. Where processing time after the depressurisation is too short, significant shrinkage results, but conversely, if heating post depressurisation continues for too long, overcooking of the foam product may result.

It is understood by the inventors that if heating occurs for too long before initiating depressurisation, the internal vapour pressure inside the pellets become significantly greater than the pressure in the vessel resulting in vapour from the pellets escaping, drying the raw material out, and as a result leaving the material vulnerable to overcooking or drying.

A further unexpected finding by the inventors is that the rate of pressure decrease (depressurisation) may have a significant impact on the level of initial expansion and final foam density. It is the inventors' experience that when too high a rate of depressurisation occurs, an excellent initial expansion results but a higher level of shrinkage post depressurisation also occurs. For a depressurisation rate that is too slow, inadequate initial expansion results. The inventors have found that an optimum rate of depressurisation exists where the net effect of expansion and shrinkage yields a foam product of the lowest density and the best surface appearance. This optimum rate may be achieved by matching the timing and rate of depressurisation to the temperature profile for a particular raw material where the temperature profile is a function of the vapour and melt temperature for a given pressure level. Given the above, a pressure decrease is initiated when the vapour and hence melt temperature is at its maximum before decomposition commences. For example, using the raw material used in the examples below, at 10bar pressure the maximum temperature is around 200°C and the rate of depressurisation is between 0.5-10 bar per second in order to produce the best foam.

Preferably, the pressure is reduced at a rate of 0.001 to 200 bar per second.

Preferably, the pressure is reduced rapidly at a rate of 0.5 to 10 bar per second during step (c). This range should not however be seen as limiting as it should be appreciated that the range is dependent on various factors such as the raw material used, the apparatus design, the heating rate achieved in the raw material and the initial increased pressure used.

In preferred embodiments, the pressure decreases within 0.1 to 10 seconds.

In a further preferred embodiment, the pressure decrease occurs as one continuous pressure drop although, it should be appreciated that more than one pressure decrease step may be used without departing from the scope of the invention.

It should also be realised that a key parameter in the pressure step is the pressure drop, hence, although a decrease to atmospheric conditions is a preferred embodiment, it may be beneficial to reduce the pressure to vacuum conditions.

Preferably, the pressure decrease commences in the last half of the overall time to complete step (c) although, it should be appreciated that this time may vary depending on the raw material used as well as the pressure and heating profile used during the heating cycle.

In one alternative embodiment, the raw biodegradable material is subjected to a pressure increase before step (c) commences.

In another alternative embodiment, the raw biodegradable material is preheated before step (c) commences. Preferably, the raw biodegradable material may be preheated to a temperature below the raw biodegradable material melt temperature.

In one embodiment, the pressure increase and preheat steps described above undertaken before step (c), are completed at substantially the same time.

The preferred mould arrangement is substantially equivalent to embodiments encompassed and described in WO 03/037598. In particular, preferred mould embodiments of the present invention utilise a substantially microwave transparent mould material which is coated with a susceptor or microwave interactive material which causes the inner mould surface to heat during microwave heating.

Most preferably, the mould includes vents located on the mould walls. In preferred embodiments, vents are holes in the mould wall that are sized to be large enough to allow the dissipation of vapour from the blowing agent flashing off, but also small enough to achieve a smooth surface finish. Most preferably, the vent hole diameter is approximately 0.25 mm to 3 mm.

From the above discussion it should be appreciated that critical key processing factors have been identified to produce a biodegradable foamed product including:
❖ the pressure increase;
❖ the heating process;
❖ the timing of when the pressure is decreased (depressurisation); and,
❖ the rate of pressure decrease (depressurisation).

The method has the advantage of producing biodegradable foamed products with improved properties of a lower density, improved cushioning performance and improved surface finish, all being important characteristics in packaging applications. Further, the method may be completed rapidly therefore allowing greater production speed.

The biodegradable foamed product produced by the method of the invention may have a thickness of up to approximately 1 metre manufactured from a biodegradable raw material with properties including:
(a) a density from 10 to 100 kg/m³;
(b) a soft and resilient structure;
(c) cushioning G-value characteristics to cushion an object with a fragility of 15 to 115;
(d) a surface abrasion comparable to polystyrene.

Preferably, the density is from 20 to 60 kg/m³.

It is understood by the inventors that the cushioning performance is effected at least in part by incomplete expansion in a mould, and the resilience of the surface of the foam. It is the inventors' experience that an ideal foamed product may be obtained by a manufacturing method that minimises the number of voids within the foam.

Cushioning factor may be measured by a number of techniques including that outlined in British Standard BS7539. In order to protect articles with a fragility factor of between 15 and 115 it is desirable for the foam to have a G-value in a similar range. G-value for a foam is understood to give a foam with the ability to sufficiently attenuate shock and vibrations such that the packaged article under normal circumstances is unlikely to be exposed to a G-force greater than this numerical value. The higher the foam G-value the less suitable it might be for packaging fragile or delicate articles. The product of the present invention has a G-value to adequately protect items with a fragility factor between 15 and 115.

Surface abrasion characteristics can be described by way of an abrasion test. In tests curried out on foam samples of the present invention, abrasion was tested by rubbing foam across aluminium sheets of differing hardness values. No difference in abrasion level was found by the inventors between samples of expanded polystyrene and the product of the present invention when samples were compared using the abrasion method described.

It should be appreciated from the above description of the product that the product of the present invention has significantly improved characteristics over the prior art. In particular, the reduced density of the foam product in combination with improved cushioning characteristics means that the product is ideally suited for packaging applications. Given that the foam product is biodegradable, the invention provides an environmentally friendly alternative to polystyrene which is used in most packaging applications.

According to a further aspect of the present invention there is provided an apparatus for the production of a biodegradable foamed product according to claim 23.

Preferably the compressed gas is air although it should be appreciated that a wide variety of gases may be used to place the raw material under pressure without departing from the scope of the invention.

In one embodiment, the microwave cavity including the mould and raw material is pressurised. In an alternative embodiment the apparatus further includes a sealed chamber which acts the pressure vessel (hereafter referred to as the chamber) within which the mould and raw material are placed, the chamber is positioned inside the apparatus cavity, and the chamber containing the mould and raw material, is pressurised.

Preferably the raw material is a biodegradable raw material. It should be appreciated that other materials may also be used in accordance with the present invention and this should not be seen as limiting. For example, other non-biodegradable raw materials may also be used such as plastics and polystyrene precursors.

Preferably, the apparatus is designed to handle a pressure of between 1.5 and 100 bar. More preferably, the pressure is between 3 and 20 bar.

Preferably, the apparatus is designed to be able to reduce the pressure during microwave heating. More preferably, the apparatus is designed to enable a pressure decrease at a rate of 0.001 to 200 bar per second.

Preferably, the apparatus includes a plurality of magnetrons, the exact number depending on factors such as the size of the cavity. Preferably, the magnetrons are capable of heating the raw material at a rate of up to 25°C per second. More preferably, the rate of heating is between 2°C and 10°C per second.

Preferably, the magnetrons operate at a frequency from approximately 915 MHz to 5 GHz. Most preferably, the frequency is an approximately constant level of 2450 MHz (domestic microwave frequency). It should be appreciated that use of domestic microwave frequencies is preferable to reduce the need for manufacture of tailored magnetrons for the apparatus and therefore minimising capital costs.

As described in WO 03/037598, by utilising a plurality of magnetrons situated around the walls of the cavity, a uniform field can be established within a pressurised cavity. This has the advantage of avoiding the need for mode stirrers or movement of the raw material during the heating cycle.

Preferably, the apparatus includes at least one inlet for pressurising the cavity or vessel if used. It should be appreciated that where multiple inlet ports are used, the time taken to pressurise the cavity or vessel to the desired pressure level can be minimised. A design consideration also is that if ports are used that are too large in size, they may interfere with the microwave feed arrangement hence a number of smaller inlet ports is preferable.

Preferably, the apparatus includes at least one outlet for depressurising the cavity or pressure vessel if used. In preferred embodiments, multiple outlet ports may be located around the microwave cavity to enable depressurisation to be effected. A plurality of ports may be used to vary the rate of depressurisation. Alternatively, the rate of depressurisation may be varied using a flow-restricting device. Preferably, the outlet is a valve.

Preferably, the cavity shape is selected from a group consisting of: cylindrical, asymmetrical hexagonal or semi-elliptical. Most preferably, it is the inventors' experience that the cavity size should be a multiple of the microwave frequency wavelength.

Preferably, apparatus includes at least one wave guide. Preferably, the number of wave guides used match the number of magnetrons used although, this should not be seen as limiting as it should be appreciated that additional wave guides may be used as may be required for design purposes. Preferably, wave-guides connect the cavity to the power modules used to generate microwaves via wave-guide ports.

Preferably, the apparatus includes at least one pressure window located between the waveguide exit point and the cavity. Preferably, the pressure window or windows are manufactured from a substantially microwave transparent material such as quartz or Teflon™. In preferred embodiments, the window also includes a thin sacrificial window made from mica. A sacrificial window may be useful as, should any arcing or plasma occur, the relatively cheaper sacrificial window will be damaged therefore protecting the more expensive pressure window.

Preferably, the apparatus includes a pressure relief valve. In preferred embodiments, the pressure relief valve is piped to a spacing (preferably encapsulated with air) between two pressure windows. If the pressure in this space exceeds a pre-determined level the relief valve opens and vents gas.

Alternatively, the apparatus may include microwave launchers in place of the wave-guides to feed microwave energy directly to the cavity from the magnetrons.

Preferably, the cavity may be opened and closed to allow insertion and removal of the mould and raw material. More preferably, the cavity splits apart.

In an alternative embodiment, the cavity, mould and chamber if used, have an injection point through which, by use of an injection gun, raw material can be inserted into the mould. Preferably, the injector gun or guns are connected to at least one feed hopper outside the microwave cavity. The injector guns also house ejector pins. After loading of the pellets, ejector pins are positioned flush with the inner mould surface to plug the mould ports. Ejection of the foam is achieved when the ejector pins are pushed proud of the inner mould surface. Additional ejector pins may be located in the lower half of the mould.

Preferably, a ring or hoop mechanism is used to seal the cavity and pressure chamber if used. In one preferred embodiment, the apparatus is formed from two halves, each half having a castellated flange. A castellated locking ring is rotated or clamped to seal to the apparatus. Chokes may also be added to the inner cavity surface where the cavity halves join to eliminate microwave leakage.

Preferably, interlock devices are also included as part of the sealing process to ensure that the apparatus cannot be operated without adequate sealing of the cavity.

In preferred embodiments, structures such as microwave transparent platens are included inside the cavity or pressure vessel if used to house the mould arrangement. Such structures may be mounted in each of the cavity halves.

Once the heating cycle is completed using the apparatus, the product may be removed from the apparatus or at least the mould. In one embodiment, the product is removed using compressed air forced through the mould vents.

The preferred mould arrangement is substantially equivalent to embodiments encompassed and described in WO 03/037598. In particular, preferred mould embodiments of the present invention utilise a largely microwave transparent mould material which is coated with a susceptor or microwave interactive material which causes the inner mould surface to heat during microwave heating.

One advantage of the above described apparatus is the size of foamed product that may be produced. Prior art methods such as autoclaves and selected microwave pressure vessels exist for uses such as chemical analysis however, only very small sample sizes can be processed. The apparatus of the present invention that includes multiple magnetrons, pressure and microwave leakage seals, as described above, allow for the production of biodegradable foam products up to one metre thick.

A further advantage of the apparatus of the present invention is that the apparatus is comparatively inexpensive to manufacture and operate when compared with existing apparatus. A yet further advantage is that, due to the significantly reduced cycle time, processing speeds are greatly increased compared to prior art methods.

The apparatus of the present invention also has the advantage of producing a product with significantly improved properties over prior art methods including but not limited to a reduced density. This is of particular importance for packaging applications.

### BRIEF DESCRIPTION OF DRAWINGS

Further aspects of the present invention will become apparent from the ensuing description which is given by way of example only and with reference to the accompanying drawings in which:
- Figure 1: is a cross-section elevation view of one preferred pressure vessel embodiment of the present invention where a chamber is used located within a cavity;
- Figure 2: is a cross-section elevation view of a further embodiment of the present invention where the microwave cavity is pressurised; and,
- Figure 3: is a cross-section elevation view of a pressure window for a wave-guide port used in the embodiment of figure 2.

### BEST MODES FOR CARRYING OUT THE INVENTION

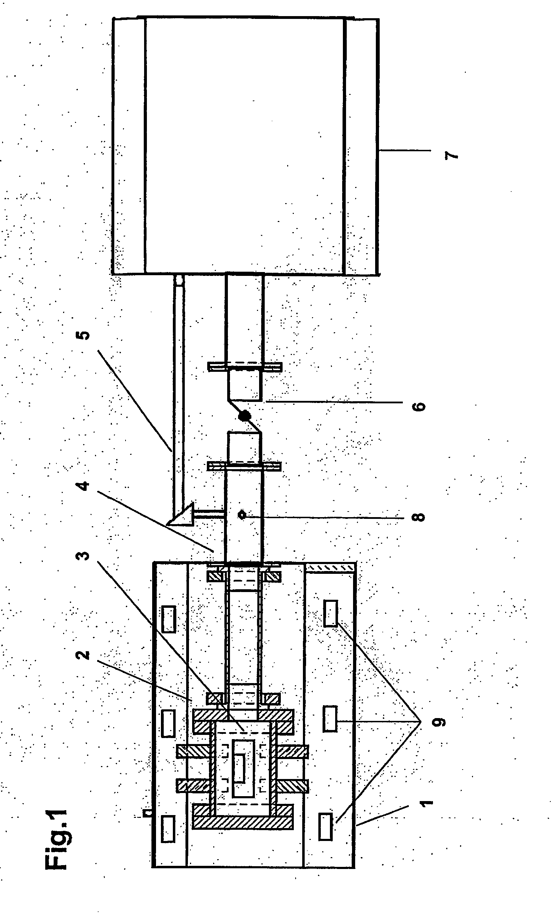

The apparatus, method of operation and product are now disclosed with reference to the embodiments shown in figures 1 to 3.

### Apparatus

One embodiment for the apparatus of the present invention is shown in Figure 1.

The apparatus consists of a microwave cavity 1 that has multiple magnetrons (not shown). The cavity 1 includes multiple microwave wave-guide ports 9 situated throughout the cavity 1 walls. A mould 3 with vents (not shown) filled with raw material (not shown) is located within a pressure vessel 2 manufactured from microwave transparent material. The mould 3, raw material and pressure vessel 2 are all located within the microwave cavity 1. The pressure in the pressure vessel 2 is increased by inserting compressed air through inlet valve 8. The pressure vessel 2 is depressurised via a flow regulated valve 6. Air released from the pressure vessel 2 via valve 6 is vented into a chamber 7. The prime aim of this chamber 7 is to dissipate noise and retain air released. A safety relief valve 5 vents if the pressure in the pressure vessel 2 exceeds the maximum predetermined pressure. A choke system 4 is situated at the junction of the pressure vessel 2 and the microwave cavity 1. This is included to prevent leakage of microwaves from the cavity 1 during a heating cycle.

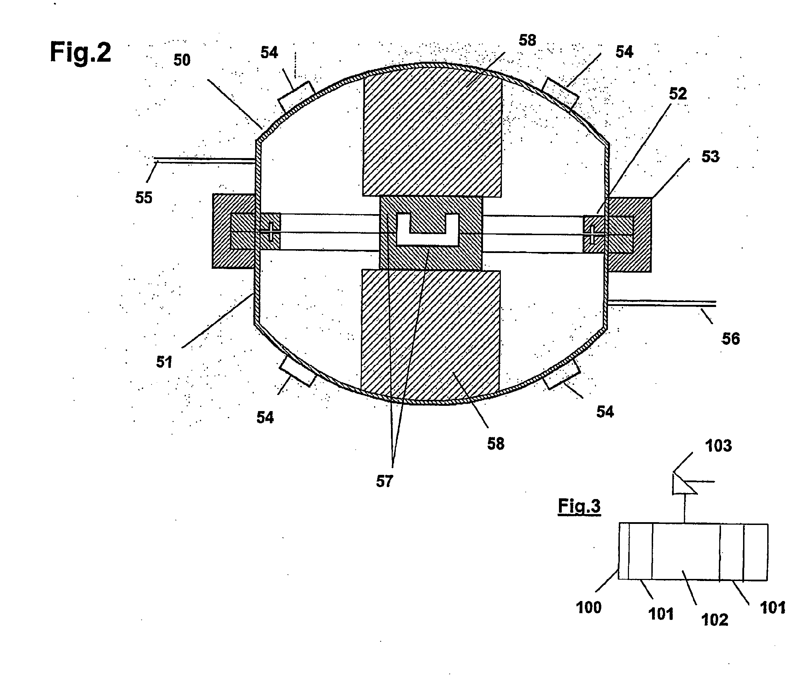

A second alternative embodiment is shown in Figure 2.

The apparatus consists of a microwave cavity made up of two halves 50,51 which, when assembled, forms a pressure vessel. A microwave choke system 52 is included to prevent leakage of microwaves from the cavity halves 50,51. A locking mechanism 53 clamps the cavity halves 50,51 together when in use. Mould halves 57 are clamped together at the same time as the two cavity halves 50,51 are clamped together. Locator pins (not shown) ensure the mould halves 57 and cavity halves 50,51 are aligned correctly. Microwave wave-guide ports 54 are situated around the cavity halves 50,51 and are located to minimise cross-coupling of microwaves during operation. An inlet port 55 is located on one side of the cavity 50. Compressed air or other gases are inserted into the cavity via the inlet port to pressurise the cavity. The cavity 50,51 is depressurised via an outlet port 56. Air or gas released from the cavity 50,51 via outlet port 56 is vented into a chamber (not shown). Support structures 58 brace the mould against the cavity walls 50,51.

Figure 3 shows a close up view of wave-guide port 54 shown in Figure 2. The wave-guide port 54 has a sacrificial window 100 at the interface of the cavity 50,51 wall through which microwaves enter the cavity 50,51. Behind the sacrificial window 100 are further pressure windows 101 separated by an air pocket 102 with a safety relief valve 103. The valve 103 vents if the pressure in the cavity 50,51 reaches unsafe levels, thus protecting the microwave heating modules (not shown). attached to the wave-guides located in the guide port 54.

### Methods of Manufacture

### Method Example 1

This example shows a best method for production of a foamed product based on trials completed by the inventors.
1. Place 110 grams of starch pellets (raw material) formed by extrusion and containing approximately 22% wt moisture into a mould 3, 57 manufactured from ULTEM polyetherimide. The inner mould 3, 57 surfaces are coated with a ferrite/silicone rubber liner (not shown) which acts as a susceptor or microwave interactive material that heats during the heating cycle. The mould 3,57 shape is cylindrical with a diameter of 105mm, and a length of 255mm. The mould 3,57 is vented on all walls. More information regarding preferred moulds and configurations 3,57 is discussed in WO 03/037598.
2. Clamp the mould 3,57 shut.
3. Place the mould 3,57 inside an apparatus as described above and shown in figures 1 to 3;
4. Seal the chamber 2 if used, and cavity 1,50,51;
5. Set the power level to a maximum power of 16 magnetrons arranged around the microwave cavity 1,50,51;
6. Increase the pressure in the cavity 50,51 or chamber 2 (and mould 3,57 contained within) to 10 bar over a period of 5 seconds;
7. Commence the heating cycle with the pressure held at approximately 10 bar for a time period of 22 seconds;
8. After 22 seconds, depressurise the cavity 50,51 or chamber 2 to atmospheric pressure via a 12.7 mm (½ inch) valve 6 or outlet port 56, taking approximately 5 seconds to return the cavity 50,51 or chamber 2 to atmospheric pressure;
9. After approximately 3 more seconds the heating cycle is stopped and the foamed product removed.

The product formed from the above process is a fully formed foam shape with a density in the order of 42kg/m³ and a smooth and resilient foam surface.

The surface has an abrasion level and cushioning characteristics directly comparable to polystyrene.

### Method Example 2

The effect of a two stage depressurisation method is shown below with variations in the first pressure used.

The procedure used was as follows:
1. The power level was set to 16 magnetrons;
2. 110g of the raw material of method example 1 was placed inside the cylindrical mould 3 of method example 1;
3. The mould 3 was placed inside the chamber 2 and located inside the microwave cavity 1
4. 10 bar pressure was applied in the chamber 2;
5. The raw material was then heated for 22 seconds after which time the 12.7 mm (1/2") depressurisation valve 6 was opened to allow the pressure to drop to 1.5 bar;
6. After 30 seconds total cycle time (including the 22 seconds of step 5) a second 10.2 mm (4") decompression valve 6 was opened to allow the pressure in the chamber 2 to lower to atmospheric pressure;
7. The mould 3 was then removed from the chamber 2 and the foam product removed;
8. Steps 1 to 7 were then repeated for initial applied pressures of 8, 6, 4, 2, 1.5, and 0 bar.

In summary, the pressure profiles used were as follows:

| Time | Pressure Profile Number | | | | | | |
|---|---|---|---|---|---|---|---|
| | 1 | 2 | 3 | 4 | 5 | 6 | 7 |
| 0 | 10 | 8 | 6 | 4 | 2 | 1.5 | 0 |
| 22 | 1.5 | 1.5 | 1.5 | 1.5 | 1.5 | 1.5 | 0 |
| 30 | 0 | 0 | 0 | 0 | 0 | 0 | 0 |

This trial showed that the greater the initial pressure level, and hence the pressure difference, the fuller the foam shape.

### Method Example 3

The effect of a two stage depressurisation method is shown below with variations in the second pressure used.
1. The power level was set to 16 magnetrons;
2. 110g of the raw material of method example 1 was placed inside the cylindrical mould 3 of method example 1;
3. The mould 3 was placed inside the chamber 2 and located inside the microwave cavity 1;
4. 10 bar pressure was applied in the chamber 2;
5. The raw material was then heated for 22 seconds after which time the 12.7 mm (1/2") depressurisation valve 6 was opened to allow the pressure to drop to 8.0 bar;
6. After 30 seconds total cycle time (including the 22 seconds of step 5) a second 10.2 mm (4") decompression valve 6 was opened to allow the pressure in the chamber 2 to lower to atmospheric pressure;
7. The mould 3 was then removed from the chamber 2 and the foam product removed;
8. Steps 1 to 7 were then repeated for initial applied pressures of 6, 4, 2, 1.5, 0 bar.

In summary, the pressure profiles used were as follows:

| Time | Pressure Profile Number | | | | | | |
|---|---|---|---|---|---|---|---|
| | 1 | 2 | 3 | 4 | 5 | 6 | 7 |
| 0 | 10 | 10 | 10 | 10 | 10 | 10 | 10 |
| 22 | 8 | 6 | 4 | 2 | 1.5 | 0 | 0 |
| 30 | 0 | 0 | 0 | 0 | 0 | 0 | 0 |

The results found were as follows:

| *Time* | **0** | **22** | **30** | *Comments* |
|---|---|---|---|---|
| Profile 1 | 10 | 8 | 0 | Excellent expansion as seen by flashing and vent hole marks but some shrinkage. |
| Profile 2 | 10 | 6 | 0 | Excellent expansion as seen by flashing and vent hole marks but some shrinkage, although not to the extent of profile 1 |
| Profile 3 | 10 | 4 | 0 | Equal worst sample in terms of filling Poor filling in comparison to 10-0-0 bar ΔP |
| Profile 4 | 10 | 2 | 0 | Equal worst sample in terms of filling Poor filling in comparison to 10-0-0 bar ΔP |
| Profile 5 | 10 | 1.5 | 0 | Good expansion, low shrinkage, similar to profile 6 |
| Profile 6 | 10 | 0 | 0 | The best of all samples in this set Good expansion, low shrinkage so net effect was best density |

In summary, the best net result (considering expansion and shrinkage) was achieved with a large initial and small final pressure drop i.e. 10-1.5-0 bar and 10-0-0 bar.

### Method Example 4

A one step depressurisation step method is shown below with variations in the timing of the depressurisation step shown.
1. The power level was set to 16 magnetrons;
2. 110g of the raw material of method example 1 was placed inside the cylindrical mould 3 of method example 1;
3. The mould 3 was placed inside the chamber 2 and located inside the microwave cavity 1;
4. 10 bar pressure was applied in the chamber 2;
5. The raw material was then heated for 8 seconds after which time the 10.2 mm (4") depressurisation valve 6 was opened to allow the pressure to drop to 0 bar;
6. After 30 seconds total cycle time (including the 8 seconds of step 5) the mould 3 was then removed from the chamber 2 and the foam product removed;
7. Steps 1 to 6 were then repeated for pressurisation times of 14, 18, 22, 26 seconds.

In summary, the pressure profiles used were as follows:

| Time | Pressure Profile Number | | | | |
|---|---|---|---|---|---|
| | 1 | 2 | 3 | 4 | 5 |
| 0 | 10 | 10 | 10 | 10 | 10 |
| 4 | 10 | 10 | 10 | 10 | 10 |
| 8 | 0 | 10 | 10 | 10 | 10 |
| 14 | 0 | 0 | 0 | 10 | 10 |
| 18 | 0 | 0 | 0 | 0 | 10 |
| 22 | 0 | 0 | 0 | 0 | 10 |
| 26 | 0 | 0 | 0 | 0 | 0 |
| 30 | 0 | 0 | 0 | 0 | 0 |

The results found were as follows:

For pressure drops at times 14, 18 & 22 seconds (profiles 2 to 5), it was found that the greater the time until the pressure drop, the greater the level of expansion. For profile 1 where the pressure drop was undertaken after 8 seconds, the expansion was poor with poor adhesion in the final product. This result is most likely because 8 seconds was insufficient time to have initiated 'boiling' of the water (blowing agent) hence no expansion resulted from the large pressure drop.

The sample produced using profile 4 (14 seconds) showed signs of the pelleted raw material having ruptured at the time of pressure drop. This is most likely the result of subjecting the pellets to explosive decompression before the pellets had heated sufficiently to 'plasticize' the pellets to a point where they would flow rather than rupturing as the result of the expansion force of the internal vapour pressure.

For the sample produced using profile 5 (26 seconds), the expansion was good with flashing indicating high pressures were reached , but shrinkage appeared to be a problem with the sample produced as the sample had smaller dimensions than the sample produced using profile 4.

### Method Example 5

A one step depressurisation process trial was undertaken to determine whether or not increasing processing time before pressure drop aids in foam expansion.

As the processing time before the pressure drop was increased from 22 seconds to 34 seconds and 38 seconds, the level of foam expansion decreased. The raw material pellets also showed signs of overcooking as the processing time before the pressure drop increased.

It is thought that at processing times (before the pressure drop) of over 22 seconds, the internal vapour pressure inside the pellets was significantly greater than the pressure in vessel resulting in blowing agent (water) escaping the raw material before expansion. As a result that material dried out and became overcooked.

### Method Example 6

A one step depressurisation process is shown below with variations used in the amount of time that microwave heating continues after the depressurisation step.

The object of this trial was to assess whether or not increasing the processing time after the pressure drop could aid in minimising shrinkage of the foam.

It was found that as the processing time after the pressure drop increased, the amount of shrinkage decreased. However, at post depressurisation processing times greater than 8 seconds, the foam samples showed significant areas of overcooking.

### Method Example 7

Trials are shown below testing the effect that the rate of depressurisation has on the product produced.

For each experiment with differing depressurisation rates, different start pressures were also used to determine if the start pressure also had any effect.

The following procedure was undertaken for each of the samples:
1. The same raw material of method example 1 was placed inside a cylindrical mould 3 with characteristics as per step 1 of method example 1.
2. The loaded mould 3 was placed inside a chamber 2.
3. Pressures of 1.5, 2.5, 5.0, 7.5 and 10 bar were applied to the chamber 2 for each trial respectively.
4. The heating cycle was then started using a total of 10 magnetrons and a processing time of 40 seconds for all trials.
5. The pressure in the cavity 2 was then released in one continuous step immediately after the heating cycle had completed using three different sized depressurisation valves 6 10.2, 12.7 or 6.35 mm (large sized (4" butterfly), intermediate sized (1/2" ball) and small sized (1/4" ball)) which allowed differing rates of depressurisation.

Results found from the above trials concluded that:
❖ The higher the pressure used, the greater the degree of overcooking.
❖ At all the pressure levels investigated, when depressurising at the end of the cycle, the higher the rate of depressurisation, the higher the level of expansion achieved.

More specifically:
❖ When depressurising through the largest valve 6 at the end of the heating cycle, the higher the 'applied' pressure, the greater the 'initial' expansion but also, the greater the shrinkage observed.
❖ When depressurising through the intermediate sized valve 6 at the end of the heating cycle, the higher the 'applied' pressure, the lower the expansion achieved.
❖ When depressurising through the smallest valve 6 at the end of the heating cycle, the higher the 'applied' pressure, the lower the expansion achieved.

It should be appreciated from the above examples that there are provided methods and associated products and apparatus to produce a foamed product with improved foaming properties to result in a product with a low density, improved cushioning characteristics and a surface finish and abrasion level comparable to polystyrene.

Aspects of the present invention have been described by way of example only and it should be appreciated that modifications and additions may be made thereto without departing from the scope thereof as defined in the appended claims.

## Claims

1. A method of producing a biodegradable foamed product including the steps of:
(a) placing a raw biodegradable material into a mould (3, 57);
(b) locating the mould 3, 57 in a microwave cavity (1, 50, 51);
(c) conducting a microwave heating cycle; wherein
during step (c) the raw material is subjected to at least one controlled pressure increase and decrease using a compressed gas, **characterised in that** microwave heating continues after the pressure is decreased to atmospheric pressure during step (c).

2. The method of claim 1 wherein the compressed gas is air.

3. The method of either claim 1 or claim 2 wherein the compressed gas is not pre-treated.

4. The method as claimed in any of the above claims wherein the raw biodegradable material is derived from starch, cellulose, protein or a derivative of starch, cellulose, or protein and combinations thereof.

5. The method as claimed in any of the above claims wherein the raw material has a moisture content in the order of 15 to 50% wt.

6. The method as claimed in any of the above claims wherein the raw biodegradable material is pre-formed by a heat and shear process into pellets.

7. The method as claimed in any of the above claims wherein step (c) is completed in under one minute.

8. The method as claimed in any of claims 1 to 6 wherein step (c) is completed in the order of 30 seconds.

9. The method as claimed in any of the above claims wherein the increased pressure is maintained for over half of the duration of step (c).

10. The method as claimed in any of the above claims wherein the raw material is subjected to a pressure of between 1.5 and 100 bar during step (c).

11. The method as claimed in any of claims 1 to 9 wherein the raw material is subjected to a pressure of between 3 and 20 bar during step (c).

12. The method as claimed in any of the above claims wherein the pressure decrease occurs at a rate of 0.001 to 200 bar per second.

13. The method as claimed in any of the above claims wherein the pressure is decreased rapidly at a rate of 0.5 to 10 bar per second during step (c).

14. The method as claimed in any of the above claims wherein the timing and rate of pressure decrease is matched to the temperature profile for the raw material.

15. The method as claimed in any of the above claims wherein the pressure decreases within 0.1 to 10 seconds.

16. The method as claimed in any of the above claims wherein the pressure decrease occurs as one continuous pressure drop.

17. The method as claimed in any of the above claims wherein the pressure decrease commences in the last half of the overall time to complete step (c).

18. The method as claimed in any of the above claims wherein the raw material is subjected to a pressure increase before step (c) commences.

19. The method as claimed in any of the above claims wherein the raw material is preheated before step (c) commences.

20. The method as claimed in claim 19 wherein the biodegradable material is preheated to a temperature below the raw biodegradable material melt temperature.

21. The method as claimed in any of the above claims wherein the mould (3, 57) is substantially microwave transparent and is coated with a susceptor material.

22. The method as claimed in any of the above claims wherein the mould (3, 57) includes vents.

23. An apparatus for the production of a biodegradable foamed product with a thickness of up to 1 metre including:
(a) a cavity (1, 50, 51);
(b) a mould (3, 57) capable of containing a raw material that is able to be melt processed when subjected to heat and pressure treatment to form a foam;
(c) at least one magnetron capable of microwave heating the raw material in a microwave heating cycle;
(d) at least one outlet valve (6, 56) for depressurization;
**characterised in that** the apparatus also includes (e) at least one inlet valve (8, 55) through which a compressed gas passes; and, is capable of subjecting the raw material to controlled pressure increases and decreases using compressed gas in conjunction with microwave heating and the apparatus is capable of continuing microwave heating after the pressure is decreased to atmospheric pressure.

24. The apparatus as claimed in claim 23 wherein the compressed gas is air.

25. The apparatus as claimed in either claim 23 or claim 24 wherein the apparatus further includes a sealed chamber (2) within which the mould (3, 57) and raw material are placed, the chamber (2) is positioned inside the apparatus cavity (1), and the chamber (2) containing the mould (3), (57) and raw material, is pressurised.

26. The apparatus as claimed in any of claims 23 to 25 wherein the outlet (6, 56) is a valve.

27. The apparatus as claimed in any of claims 23 to 26 wherein the magnetrons are capable of heating the raw material at a rate of up to 25°C per second.

28. The apparatus as claimed in any of claims 23 to 27 wherein the magnetrons operate at a frequency from approximately 915 MHz to 5 GHz.

29. The apparatus as claimed in any of claims 23 to 27 wherein the magnetrons operate at a frequency of an approximately constant level of 2450 MHz.

30. The apparatus as claimed in any of claims 23 to 29 wherein the apparatus includes at least one pressure window (101) manufactured from a substantially microwave transparent material and located between a waveguide exit point (9, 54) and the cavity (1, 50, 51).

31. The apparatus as claimed in claim 30 wherein the window (101) includes a sacrificial window 100.

32. The apparatus as claimed in any of claims 23 to 31 wherein the apparatus includes an injection point through which raw material can be inserted into the mould (3, 57).

33. The apparatus as claimed in any of claims 23 to 32 wherein the mould (3, 57) is substantially microwave transparent and is coated with a susceptor material.

## Patentansprüche

1. Verfahren zur Herstellung eines biologisch abbaubaren geschäumten Produkts, einschließlich der Schritte:
(a) ein biologisch abbaubares Rohmaterial in eine Form (3, 57) platzieren;
(b) die Form (3, 57) in eine Mikrowellenkavität (1, 50, 51) stellen;
(c) einen Mikrowellen-Heizzyklus durchführen,
wobei das Rohmaterial in Schritt (c) mindestens einem gesteuerten Druckanstieg und -abfall durch ein unter Druck stehendes Gas ausgesetzt wird, **dadurch gekennzeichnet, dass** das Mikrowellen-Heizen weiter andauert, nachdem der Druck in Schritt (c) bis auf atmosphärischen Druck abgesenkt ist.

2. Verfahren nach Anspruch 1, wobei es sich bei dem unter Druck stehenden Gas um Luft handelt.

3. Verfahren nach Anspruch 1 oder Anspruch 2, wobei das unter Druck stehende Gas nicht vorbehandelt wird.

4. Verfahren nach einem der vorhergehenden Ansprüche, wobei das biologisch abbaubare Rohmaterial aus Stärke, Cellulose, Protein oder einem Stärke-, Cellulose- oder Proteinderivat sowie Kombinationen derselben abgeleitet ist.

5. Verfahren nach einem der vorhergehenden Ansprüche, wobei das biologisch abbaubare Rohmaterial einen Feuchtegehalt in der Größenordnung von 15 bis 50 Gewichtsprozent aufweist.

6. Verfahren nach einem der vorhergehenden Ansprüche, wobei das biologisch abbaubare Rohmaterial durch einen Heiz- und Scherprozess zu Presslingen vorgeformt wird.

7. Verfahren nach einem der vorhergehenden Ansprüche, wobei Schritt (c) in weniger als einer Minute absolviert wird.

8. Verfahren nach einem der Ansprüche 1 bis 6, wobei Schritt (c) in der Größenordnung von 30 Sekunden absolviert wird.

9. Verfahren nach einem der vorhergehenden Ansprüche, wobei der erhöhte Druck für mehr als die halbe Dauer von Schritt (c) aufrecht erhalten bleibt.

10. Verfahren nach einem der vorhergehenden Ansprüche, wobei das Rohmaterial in Schritt (c) einem Druck zwischen 1,5 und 100 bar ausgesetzt wird.

11. Verfahren nach einem der Ansprüche 1 bis 9, wobei das Rohmaterial in Schritt (c) einem Druck zwischen 3 und 20 bar ausgesetzt wird.

12. Verfahren nach einem der vorhergehenden Ansprüche, wobei der Druckabfall mit einer Geschwindigkeit von 0,001 bis 200 bar pro Sekunde stattfindet.

13. Verfahren nach einem der vorhergehenden Ansprüche, wobei der Druck in Schritt (c) mit einer Geschwindigkeit von 0,5 bis 10 bar pro Sekunde rasch abgesenkt wird.

14. Verfahren nach einem der vorhergehenden Ansprüche, wobei der Zeitpunkt und die Geschwindigkeit des Druckabfalls dem Temperaturprofil des Rohmaterials angepasst ist.

15. Verfahren nach einem der vorhergehenden Ansprüche, wobei der Druck innerhalb von 0,1 bis 10 Sekunden abfällt.

16. Verfahren nach einem der vorhergehenden Ansprüche, wobei der Druckabfall in Form eines kontinuierlichen Druckabfalls stattfindet.

17. Verfahren nach einem der vorhergehenden Ansprüche, wobei der Druckabfall in der letzten Hälfte der Gesamtdauer des gesamten Schritts (c) beginnt.

18. Verfahren nach einem der vorhergehenden Ansprüche, wobei das Rohmaterial einem Druckanstieg ausgesetzt wird, bevor Schritt (c) beginnt.

19. Verfahren nach einem der vorhergehenden Ansprüche, wobei das Rohmaterial vorgeheizt wird, bevor Schritt (c) beginnt.

20. Verfahren nach Anspruch 19, wobei das biologisch abbaubare Rohmaterial bis auf eine Temperatur unterhalb der Schmelztemperatur des biologisch abbaubaren Rohmaterials vorgeheizt wird.

21. Verfahren nach einem der vorhergehenden Ansprüche, wobei die Form (3, 57) im Wesentlichen mikrowellentransparent ist und mit einem Suszeptormaterial beschichtet ist.

22. Verfahren nach einem der vorhergehenden Ansprüche, wobei die Form (3, 57) Belüftungsöffnungen beinhaltet.

23. Apparatur zur Herstellung eines biologisch abbaubaren geschäumten Produkts mit einer Dicke von bis zu 1 Meter, beinhaltend:
(a) eine Kavität (1, 50, 51);
(b) eine Form (3, 57), die in der Lage ist, ein Rohmaterial zu enthalten, das schmelzbearbeitet werden kann, wenn es einer Heiz- und Druckbehandlung ausgesetzt wird, um einen Schaum zu bilden;
(c) mindestens ein Magnetron, das in der Lage ist, das Rohmaterial in einem Mikrowellen-Heizzyklus zu heizen;
(d) mindestens ein Auslassventil (6, 56) zur Druckentlastung;
**dadurch gekennzeichnet, dass** die Apparatur darüber hinaus beinhaltet (e) mindestens ein Einlassventil (8, 55) durch das ein unter Druck stehendes Gas hindurchtritt, und und in der Lage ist, das Rohmaterial unter Anwendung eines unter Druck stehenden Gases in Verbindung mit einem Mikrowellen-Heizen einem gesteuerten Druckanstieg und -abfall zu unterziehen und die Apparatur in der Lage ist, das Mikrowellen-Heizen fortzusetzen, nachdem der Druck bis auf atmosphärischen Druck abgesenkt wird.

24. Apparatur nach Anspruch 23, wobei es sich bei dem unter Druck stehenden Gas um Luft handelt.

25. Apparatur nach Anspruch 23 oder Anspruch 24, wobei die Apparatur darüber hinaus eine versiegelte Kammer (2) beinhaltet, in die die Form (3, 57) und das Rohmaterial platziert werden, wobei die Kammer (2) sich im Inneren der Apparaturkavität (1) befindet und die Kammer (2), die die Form (3, 57) und das Rohmaterial enthält, unter Druck steht.

26. Apparatur nach einem der Ansprüche 23 bis 25, wobei es sich bei dem Auslass (6, 56) um ein Ventil handelt.

27. Apparatur nach einem der Ansprüche 23 bis 26, wobei die Magnetrone in der Lage sind, das Rohmaterial mit einer Geschwindigkeit von bis zu 25°C pro Sekunde zu heizen.

28. Apparatur nach einem der Ansprüche 23 bis 27, wobei der Betrieb der Magnetrone bei einer Frequenz von ungefähr 915 MHz bis 5 GHz erfolgt.

29. Apparatur nach einem der Ansprüche 23 bis 27, wobei der Betrieb der Magnetrone bei einer Frequenz mit einem ungefähr konstanten Level von 2450 MHz erfolgt.

30. Apparatur nach einem der Ansprüche 23 bis 29, wobei die Apparatur mindestens ein Druckfenster (101) beinhaltet, das aus einem im Wesentlichen mikrowellentransparenten Material gefertigt ist und sich zwischen einem Wellenleiter-Austrittspunkt (9, 54) und der Kavität (1, 50, 51) befindet.

31. Apparatur nach Anspruch 30, wobei das Fenster (101) ein Schutzfenster (100) beinhaltet.

32. Apparatur nach einem der Ansprüche 23 bis 31, wobei die Apparatur einen Einspritzpunkt beinhaltet, durch den Rohmaterial in die Form (3, 57) eingeführt werden kann.

33. Apparatur nach einem der Ansprüche 23 bis 32, wobei die Form (3, 57) im Wesentlichen mikrowellentransparent ist und mit einem Suszeptormaterial beschichtet ist.

## Revendications

1. Procédé de production d'un produit en mousse biodégradable comprenant les étapes consistant à :
(a) placer une matière brute biodégradable dans un moule (3, 57) ;
(b) disposer le moule (3, 57) dans une cavité (1, 50, 51) à micro-ondes ;
(c) procéder à un cycle de chauffage par micro-ondes ; dans lequel
durant l'étape (c) la matière brute est soumise à au moins une augmentation et une diminution de pression contrôlées en utilisant un gaz comprimé, **caractérisé en ce que** le chauffage par micro-ondes continue après avoir diminué la pression à la pression atmosphérique durant l'étape (c).

2. Procédé selon la revendication 1 dans lequel le gaz comprimé est de l'air.

3. Procédé selon la revendication 1 ou la revendication 2 dans lequel le gaz comprimé n'est pas prétraité.

4. Procédé selon l'une quelconque des revendications précédentes dans lequel la matière brute biodégradable est obtenue à partir d'amidon, de cellulose, d'une protéine ou d'un dérivé de l'amidon, de la cellulose, ou d'une protéine et leurs combinaisons.

5. Procédé selon l'une quelconque des revendications précédentes dans lequel la matière brute a une teneur en humidité de l'ordre de 15 à 50 % en poids.

6. Procédé selon l'une quelconque des revendications précédentes dans lequel la matière brute biodégradable est préformée par un processus de chauffage et de cisaillement en pastilles.

7. Procédé selon l'une quelconque des revendications précédentes dans lequel l'étape (c) est terminée en moins d'une minute.

8. Procédé selon l'une quelconque des revendications 1 à 6 dans lequel l'étape (c) est terminée en environ 30 secondes.

9. Procédé selon l'une quelconque des revendications précédentes dans lequel la pression augmentée est maintenue pendant plus de la moitié de la durée de l'étape (c).

10. Procédé selon l'une quelconque des revendications précédentes dans lequel la matière brute est soumise à une pression se situant entre 1,5 et 100 bars durant l'étape (c).

11. Procédé selon l'une quelconque des revendications 1 à 9 dans lequel la matière brute est soumise à une pression se situant entre 3 et 20 bars durant l'étape (c).

12. Procédé selon l'une quelconque des revendications précédentes dans lequel la diminution de pression survient à un taux de 0,001 à 200 bars par seconde.

13. Procédé selon l'une quelconque des revendications précédentes dans lequel la pression est diminuée rapidement à un taux de 0,5 à 10 bars par seconde durant l'étape (c).

14. Procédé selon l'une quelconque des revendications précédentes dans lequel le temps et le taux de diminution de pression sont adaptés au profil des températures pour la matière brute.

15. Procédé selon l'une quelconque des revendications précédentes dans lequel la pression diminue dans un laps de temps de l'ordre de 0,1 à 10 secondes.

16. Procédé selon l'une quelconque des revendications précédentes dans lequel la diminution de pression se produit sous forme d'une chute de pression continue.

17. Procédé selon l'une quelconque des revendications précédentes dans lequel la diminution de pression commence dans la deuxième moitié du temps total nécessaire pour terminer l'étape (c).

18. Procédé selon l'une quelconque des revendications précédentes dans lequel la matière brute est soumise à une augmentation de pression avant que l'étape (c) commence.

19. Procédé selon l'une quelconque des revendications précédentes dans lequel la matière brute est préchauffée avant que l'étape (c) commence.

20. Procédé selon la revendication 19 dans lequel la matière biodégradable est préchauffée jusqu'à une température en dessous de la température de fusion de la matière brute biodégradable.

21. Procédé selon l'une quelconque des revendications précédentes dans lequel le moule (3, 57) est sensiblement transparent aux micro-ondes et est revêtu d'une matière susceptrice.

22. Procédé selon l'une quelconque des revendications précédentes dans lequel le moule (3, 57) comprend des évents.

23. Appareil destiné à produire un produit en mousse biodégradable d'une épaisseur allant jusqu'à 1 mètre comprenant :
(a) une cavité (1, 50, 51) ;
(b) un moule (3, 57) capable de contenir une matière brute pouvant être traitée en fusion lorsqu'elle est soumise à un traitement à la chaleur et sous pression pour former une mousse ;
(c) au moins un magnétron capable de chauffer par micro-ondes la matière brute durant un cycle de chauffage par micro-ondes ;
(d) au moins une soupape de sortie (6, 56) pour une dépressurisation ;
**caractérisé en ce que** l'appareil comprend aussi (e) au moins une soupape d'admission (8, 55) à travers laquelle passe un gaz comprimé ; et, est capable de soumettre la matière brute à des augmentations et des diminutions de pression contrôlées en utilisant un gaz comprimé en même temps que le chauffage par micro-ondes et l'appareil est capable de continuer le chauffage par micro-ondes après la diminution de la pression à la pression atmosphérique.

24. Appareil selon la revendication 23 dans lequel le gaz comprimé est de l'air.

25. Appareil selon la revendication 23 ou la revendication 24 dans lequel l'appareil comprend en outre une chambre (2) scellée dans laquelle sont placés le moule (3, 57) et la matière brute, la chambre (2) est positionnée à l'intérieur de la cavité (1) de l'appareil et la chambre (2) contenant le moule (3), (57) et la matière brute, est pressurisée.

26. Appareil selon l'une quelconque des revendications 23 à 25 dans lequel la sortie (6, 56) est une soupape.

27. Appareil selon l'une quelconque des revendications 23 à 26 dans lequel les magnétrons sont capables de chauffer la matière brute à une vitesse pouvant aller jusqu'à 25 °C par seconde.

28. Appareil selon l'une quelconque des revendications 23 à 27 dans lequel les magnétrons fonctionnent à une fréquence d'environ 915 MHz à 5 GHz.

29. Appareil selon l'une quelconque des revendications 23 à 27 dans lequel les magnétrons fonctionnent à la fréquence d'un niveau à peu près constant de 2450 MHz.

30. Appareil selon l'une quelconque des revendications 23 à 29 dans lequel l'appareil comprend au moins une fenêtre (101) de pression fabriquée dans une matière sensiblement transparente aux micro-ondes et disposée entre un point (9, 54) de sortie de guide d'onde et la cavité (1, 50, 51).

31. Appareil selon la revendication 30 dans lequel la fenêtre (101) comprend une fenêtre (100) sacrificielle.

32. Appareil selon l'une quelconque des revendications 23 à 31 dans lequel l'appareil comprend un point d'injection par lequel la matière brute peut être introduite dans le moule (3, 57).

33. Appareil selon l'une quelconque des revendications 23 à 32 dans lequel le moule (3, 57) est sensiblement transparent aux micro-ondes et est revêtu d'une matière susceptrice.
